# EUROPÄISCHE PATENTSCHRIFT

(11) **EP 2 018 301 B1**
(45) Veröffentlichungstag und Bekanntmachung des Hinweises auf die Patenterteilung: **23.09.2009**
(21) Anmeldenummer: 07722439.2
(22) Anmeldetag: 16.05.2007
(51) Int. Cl.: B60R 21/34

(54) **AN EINEM KRAFTFAHRZEUG BEFESTIGBARES GEHÄUSE MIT INTEGRIERTER FUSSGÄNGERSCHUTZFUNKTION**
HOUSING THAT CAN BE FIXED TO A MOTOR VEHICLE AND HAS AN INTEGRATED PEDESTRIAN PROTECTION FUNCTION
BOÎTIER POUVANT ÊTRE FIXÉ SUR UN VÉHICULE AUTOMOBILE, À FONCTION INTÉGRÉE DE PROTECTION DES PIÉTONS

(30) Priorität: 17.05.2006 DE 102006023350; 16.10.2006 DE 202006016033 U
(43) Veröffentlichungstag der Anmeldung: 28.01.2009
(73) Patentinhaber: Montaplast GmbH, 51597 Morsbach (DE); Bayerische Motoren Werke Aktiengesellschaft, 80809 München (DE)
(72) Erfinder: KRÜGER, Jörn-Uwe, 51597 Morsbach (DE); GERHARD, Werner, 57577 Hamm/Sieg (DE); MERZ, Daniel, Rolf, 51588 Nümbrecht (DE); BEER, Bernhard, 51545 Waldbröhl (DE); WIMMER, Rudolf, A-4431 Haidershofen (AT)
(74) Vertreter: Bobzien, Hans Christoph
(86) Internationale Anmeldenummer: PCT/DE2007/000891
(87) Internationale Veröffentlichungsnummer: WO 2007/131497

(56) Entgegenhaltungen:
- EP-A- 1 426 237
- DE-A1- 10 314 220
- DE-A1-102004 054 274

## Beschreibung

Die Erfindung betrifft ein an Komponenten eines Kraftfahrtzeugs befestigbares Gehäuse bestehend aus einem ersten Gehäuseteil und einem an diesem befestigbaren zweiten Gehäuseteil. Die Komponenten können z.B. die Karosserie, der Motor oder weitere Aggregate sein. Die Gehäuseteile schließen dabei üblicherweise zwischen sich einen Hohlraum ein.

Derartige Gehäuse werden zum Beispiel als Luftfiltergehäuse eingesetzt, die bei einem üblicherweise oberhalb eines Motors unterhalb einer Motorabdeckung zur Aufnahme eines Luftfiltereinsatzes in einem Motorraum eines Kraftfahrtzeuges angeordnet sind.

Bestehende Gehäuse sind starr und können zu Verletzungen von Passanten bei einem Unfall führen, wenn das überdeckende Karosserieteil auf das starre Gehäuse auftrifft.

Neue gesetzliche Bestimmungen fordern deshalb hinsichtlich des Fußgängerschutzes und des Crashverhaltens eine bedingte Nachgiebigkeit bestimmter Partien des Kraftfahrzeuges und insbesondere des Motorraumes beim Aufprall eines Passanten. Neu zu entwickelnde Systeme müssen somit auch im Kraftfahrzeug angeordnete Gehäuse, wie z.B. das Luftfiltergehäuse, in diesen "Passantenschutz" integrieren.

Ein Gehäuse gemäß dem Oberbegriff des Anspruch 1 ist aus EP 1 426 237 bekannt.

Der Erfindung liegt damit die Aufgabe zugrunde, gattungsgemäße Gehäuse so auszubilden, dass diese zukünftige Bestimmungen zum Passantenschutz beim Crashverhalten erfüllen. Dabei muss das Gehäuse der Grundfunktion genügen, dass die Montageposition oder Ruheposition des Gehäuses beim Crash definiert verlassen wird und dabei vorzugsweise auch die Aufprallenergie absorbiert.

Erfindungsgemäß wird diese Aufgabe dadurch gelöst, dass an dem ersten Gehäuseteil ein längliches Stützelement ausgebildet ist, das mit einem proximalen Ende mit dem ersten Gehäuseteil verbunden ist und ein distal gelegenes Wirkende mit einem Wirkquerschnitt aufweist, dass das zweite Gehäuseteil ein elastisches Fixierungselement mit einer Durchgangsöffnung umfasst, deren Innendurchmesser kleiner als der Wirkquerschnitt.

Das Freiende weist somit in Einbaulage auf das zweite Gehäuseteil zu. In Erstmontageposition, also nach dem Verbinden des ersten Gehäuseteils mit dem zweiten Gehäuseteil zum Schließen des Gehäuses, sitzt das Wirkende des Stützelements auf dem elastischen Fixierungselement auf, evtl. unter leichter Vorspannung, ohne jedoch die Durchgangsöffnung zu durchdringen. Zur Realisierung einer Crashfunktion (Relativbewegung der Gehäuseteile zueinander) durchdringt das Wirkende des Stützelements aufgrund der Crashkraft die Durchgangsöffnung in dem Fixierungselement, so dass sich das Stützelement durch oder in das elastische Fixierungselement schiebt.

Durch die erfindungsgemäße Ausbildung und entsprechend geometrische Gestaltung des Wirkquerschnitts und / oder des Stützelements sowie entsprechende Materialwahl des Fixierungselements kann ein definiertes Kraft-/Weg-Verhalten zur Umsetzung eines Passantenschutzes für bekannte Crash-Werte realisiert werden. Ferner können die zusammenwirkenden Wirkflächen des Stützelements und / oder des Fixierungselements beschichtet sein, um das Kraft-Weg-Verhalten zu optimieren.

Erfindungsgemäß lässt sich auch eine definierte Verzögerung über einen vorbestimmten Weg zur Vermeidung eines harten Aufschlages eines Passanten realisieren.

Das elastische Verbindungselement kann in einem Verbindungsbereich des zweiten Gehäuseteils eingesetzt sein.

In der einfachsten Ausführungsform ist das erste Gehäuseteil in bekannter Weise mit dem zweiten Gehäuseteil zur Realisierung der Erstmontagefunktion verrastet, z.B. über einen außenseitig umgreifenden Rastverschluss. Die Crashfunktion wird hierbei über die paarweise Ausbildung des Stützelements und des korrespondierenden Fixierungselements an den Gehäuseteilen realisiert.

Eine bevorzugte Ausführungsform ermöglicht es, die Montage-Funktion und die Crashfunktion durch die entsprechende paarweise Ausbildung des Stützelements und des Fixierungselements in einem Bauteil zu kombinieren. Dieses kann beispielsweise dadurch erreicht werden, dass das Stützelement proximal von dem distalen Ende einen Hinterschnitt aufweist, und dass sich der Wirkquerschnitt proximal an diesen Hinterschnitt anschließt. Zur Umsetzung der Erstmontagefunktion wird das Stützelement zunächst soweit in das elastische Fixierungselement eingeschoben, bis das Fixierungselement den Hinterschnitt umschließt oder eingreift und die Gehäuseteile im Verhältnis zueinander in der Erstmontageposition fixiert sind; die Durchgangöffnung des Fixierungselements entspricht dabei etwa dem Durchmesser des geringsten Querschnitts am Hinterschnitt. Beim Crash wird durch die Aufprallkraft der sich an den Hinterschnitt anschließende, verbreiterte Wirkquerschnitt überwunden und ermöglicht dann eine weitere Relativbewegung der Gehäuseteile auf einander zu zur Verwirklichung der Crashfunktion. Im ersten Schritt wird somit zunächst die Montagekraft zur Fixierung des zweiten Gehäuseteils an dem ersten Gehäuseteil überwunden, sodass die beiden Gehäuseteile relativ zueinander fixiert sind. Mitunter kann dabei auch die elastische Rückstellkraft einer zwischen den Gehäuseteilen angeordneten Dichtung kompensiert werden. Die zweite Stufe und die damit verbundene Kraft bilden die mögliche Crashsituation und die damit verbundenen Kollisionskräfte eines Passanten ab. Nach Überwinden dieser im Crashfall auftretenden Kollisionskräfte ist ein definiertes Zusammenschieben der Gehäuseteile im Verhältnis zueinander in Abhängigkeit von den gewählten Geometrien und dem eingesetzten Materialien realisierbar.

Sollten die Gehäuseteile abgedichtet werden müssen, z.B. für einen Luftfilter, muss zudem sichergestellt sein, dass bei der Relativbewegung der Gehäuseteile die ursprünglich geforderte Dichtwirkung und der Toleranzausgleich erhalten bleibt. Dabei sollte sichergestellt sein, dass die Dichtung die CrashFunktion nicht behindert. Die Dichtung ist üblicherweise als Hohl- oder Lippenprofil ausgebildet und kann als separates Bauteil montiert oder als Weichkomponente angespritzt oder - geschäumt werden.

Erfindungsgemäß kann auch eine stufenweise Nachgiebigkeit je nach Aufprallkraft durch unterschiedlich ausgebildete Wirkquerschnitte entlang der Längsachse des Stützelements realisiert werden. Durch die geometrische Ausbildung der Querschnitte und des Verbindungsbereiches sind definierte Kraft-/Weg-Verhalten bedarfsgerecht aufeinander abstimmbar.

Es können auch mehrere Stützelemente zwischen dem ersten Gehäuseteil und dem zweiten Gehäuseteil ausgebildet sein, die mit entsprechenden Verbindungsbereichen mit elastischen Fixierungselementen zusammenwirken.

Die erfindungsgemäße Ausbildung der Gehäuseteile mit einem definierten Relativ-Versatz der Gehäuseteile zueinander bei Einwirken einer Crashkraft zur Verwirklichung der Crashfunktion lässt sich nicht nur für einen Luftfilter, sondern für alle Gehäuseteile im Pkw einsetzen. Bevorzugt ist jedoch die Anordnung derartiger Teile im Motorraum unterhalb der Motorabdeckung.

Der Vorteil der Erfindung liegt auch darin, dass die Bewegung des ersten Gehäuseteils im Verhältnis zum zweiten Gehäuseteil reversibel ist, also ein Crash keine bleibende Beschädigung des Systems verursacht.

Der Verbindungsbereich kann eine Fixierungsöffnung in dem zweiten Gehäuseteil umfassen, in die ein als Ring ausgebildetes elastisches Element mit einer zentralen Durchgangsöffnung für das Stützelement eingesetzt ist.

Dieser elastische Ring, der vorzugsweise aus einem Elastomer, das auch thermoplastisch sein kann, kann ferner eine nach innen ragende und spitz zulaufenden Rastlippe aufweisen, die korrespondierend zur Geometrie des Hinterschnittes ausgebildet ist, um einen Sitz in der Erstmontagestellung zu gewährleisten.

Eine andere erfindungsgemäße Lösung sieht vor, dass das Stützelement am distalen Wirkende eine Verdickung aufweist, dass das Fixierungselement einen zur Aufnahme der Verdickung ausgebildeten Hohlkörper aufweist, dass der Hohlkörper eine obere Öffnung und eine untere Öffnung aufweist, die jeweils kleiner sind als der Mirkquerschnitt, und dass der Durchmesser der oberen Öffnung größer ist als der Durchmesser der unteren Öffnung, Zur Umsetzung der Erstmontagefunktion muss die Verdickung nur die größere und damit einfacher zu überwindende obere Öffnung durchdringen; für die Crashfunktion muss die Verdickung hingegen die engere und damit schwerer zu überwindende untere Öffnung durchdringen.

In der besonders bevorzugten Ausführungsform bilden die Gehäuseteile Bestandteile eines Luftfiltergehäuses. Dabei bildet das erste Gehäuseteil vorzugsweise den Gehäusedeckel und das zweite Gehäuseteil den Gehäuseraum zur Aufnahme des Filters.

In einer Weiterentwicklung kann der in dem Luftfiltergehäuse angeordnete Fließfilter zusätzlich als energieabsorbierende Struktur mit einem definierten Kraft-/Weg-Verhalten ausgebildet sein.

Bei einer motorseitigen Montage können die die so aufgebauten Gehäuseteile zusätzlich ein akustisches Dämpfungssystem bilden.

In der bevorzugten Bauform der Gehäuseteile als Luftfiltergehäuse bildet der Luftführende Bereich (Rohluftvolumen, Filtervolumen und Reinluftvolumen) ein abgeschlossenes Luftvolumen innerhalb einer durch zwei mindestens zwei gehäusehälften gebldeten Struktur. Diese Struktur kann bei der Montage auf der Oberseite eines Verbrennungsmotors zudem als Geräuschabschirmung des Motors nach oben und hinten dienen. Dabei ist der obere Gehäuseteil vorzugsweise als Motorabdeckung mit Dekorelementen ausgeführt.

In der bevorzugten Bauform der Gehäuseteile als Luftfiltergehäuse, kann das als Geräuschabschirmung dienende Luftvolumen über das eigentlichen Luftversorgungsvolumen hinausgehen. Durch die aus zwei Gehäusehälften gebildeten Struktur können weitere Bereiche umschlossen werden, die dadurch bei einer motorseitigen Anordnung als Geräuschabschirmung hauptsächlich nach oben und hinten wirken. Ferner kann dadurch auch z.B. eine Resonatorfunktion ohne zusätzliche Bauteile integriert werden. Durch eine entkoppelte Montage der Gesamtstruktur auf dem Motor mit elastischen Elementen ergibt sich damit eine, zusätzliche Strukturdämpfungsfunktion.

Durch die zuvor beschriebene Ausführung können die sonst üblichen Schaumformteile oder Vliese zur Geräuschabschirmung unterhalb der Motorabdeckung entfallen. Durch die Doppelfunktion der Luftversorgung als Geräuschabschirmung und die Doppelfunktion der Motorabdeckung als Gehäusebestandteil, wird die Bauteileanzahl im Motorraum erheblich reduziert, was die Gesamtkosten des Fahrzeugs verringert.

Üblicherweise wird das Gehäuse als Kunststoffspritzgussteil ausgebildet sein. Bevorzugte Kunststoffe sind faserverstärkte.

Kunststoffmaterialen. Bevorzugt werden als Kunststoffmaterialien thermoplastische Formmassen eingesetzt. Daneben sind auch duroplastische Werkstoffe, Naturfaserwerkstoffe oder Metalle sowie deren Kombinationen (Hybridtechnik) verwendbar.

Die genannten Kunststoffmaterialien können weitere übliche Hilfs- und Füllstoffe aufweisen. Derartige Stoffe sind beispielsweise Gleit- oder Entformungsmittel, Wachse, Pigmente, Farbstoffe, Flammschutzmittel, Antioxidantien, Stabilisatoren gegen Lichteinwirkung oder Antistatika.

Das verwendete Kunststoffmaterial weist im allgemeinen Fasern in einer Menge von 3 bis 40 Gew.-% auf. Als Beispiele für faserförmige Füllstoffe seien Kohlenstoff-, Aramid- oder Glasfasern, Schnittglas oder Glasseidenrovings genannt. Besonders bevorzugt sind Glasfasern. Des Weiteren können als Fasern Naturfasern wie Flachs, Hanf, Jute, Sisal, Ramie oder Carnaf eingesetzt werden.

Die verwendeten Glasfasern können aus E-, A- oder C-Glas sein und sind vorzugsweise mit einer Schlichte und/oder einem Haftvermittler ausgerüstet. Ihr Durchmesser liegt im allgemeinen zwischen 6 und 30 um. Es können sowohl Endlosfasern (rovings) als auch Schnittglasfasern (staple) mit einer Länge von 1 bis 30 mm eingesetzt werden.

Weitere Einzelheiten, Vorteile und Merkmale der Erfindung lassen sich dem nachfolgenden Teil der Beschreibung entnehmen, in dem ein Ausführungsbeispiel eines Luftfiltergehäuses an Hand von Zeichnungen näher erläutert wird. Die Zeichnungen zeigen:
- Fig. 1: eine Prinzipskizze eines Motorraums eines Pkws;
- Fig. 2: eine vergrößerte Prinzipskizze eines erfindungsgemäß ausgebildeten Verbindungsbereichs in der Seitenansicht;
- Fig. 3: eine vergrößerte Prinzipskizze eines alternativ ausgebildeten Verbindungsbereichs in der Seitenansicht;
- Fig. 4: einen vergrößerten Längsschnitt durch eine erste Ausführungsform eines erfindungsgemäßen Verbindungsbereichs;
- Fig. 5: einen vergrößerten Längsschnitt durch eine zweite Ausführungsform eines erfindungsgemäßen Verbindungsbereichs;
- Fig. 6: einen vergrößerten Längsschnitt durch eine dritte Ausführungsform eines erfindungsgemäßen Verbindungsbereichs;
- Fig. 7: eine Prinzipskizze im Längsschnitt einer erfindungsgemäßen Motorabdeckung, die als Luftfiltergehäuse ausgebildet ist;
- Fig. 8: den Kraft-Weg-Verlauf bei einer beispielhaften definierten Verzögerung von zwei erfindungsgemäß verbundenen Gehäuseteilen; und
- Fig. 9: die verbrauchte Arbeit (W) über die Zeit während einer beispielhaft definierten Verzögerung der erfindungsgemäß verbundenen Gehäuseteile.

In den Figuren sind gleiche oder gleich wirkende Teile mit denselben Bezugszeichen versehen.

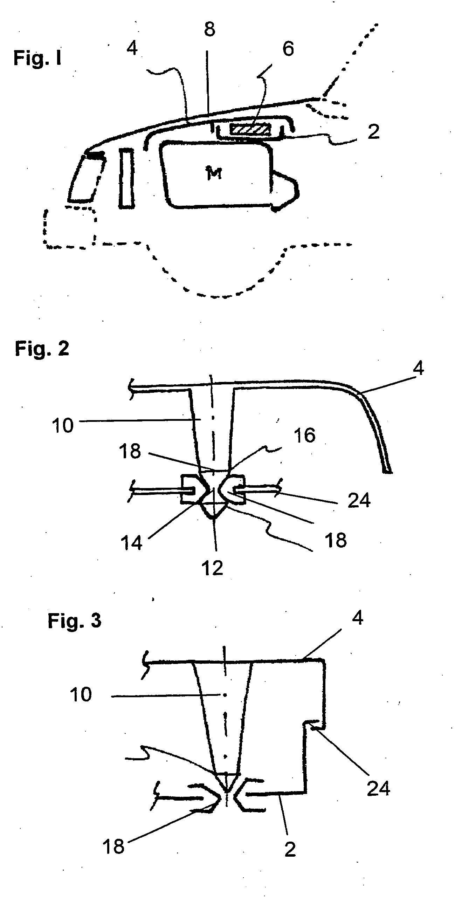

Gemäß der Prinzipskizze in Figur 1 ist das erfindungsgemäße Luftfiltergehäuse zwischen einem Gehäuseunterteil 2 und einer Motorabdeckung 4 zur Aufnahme eines Luftfiltereinsatzes 6 unterhalb einer Motorhaube 8 eines Pkws im Motorraum oberhalb eines Motors M angeordnet. Die Motorabdeckung 4 bildet dabei den Gehäusedeckel des Luftfiltergehäuses.

Figur 2 zeigt eine vergrößerte Prinzipskizze des erfindungsgemäß ausgebildeten Verbindungsbereichs zwischen der Motorabdeckung 4 und dem Gehäuseunterteil 2. Die als einstückiges Kunststoffspritzgussteil ausgebildete Motorabdeckung 4 weist einen angeformten Stützstab 10 auf, welcher in Einbaulage in Richtung des Gehäuseunterteils 2 ragt. Der Stützstab 10 ist mit einem proximalen Ende einstückig an der Motorabdeckung 4 angeformt und weist proximal von einem distalen Freiende 12 einen Hinterschnitt 14 auf. Proximal von diesem Hinterschnitt 14 ist eine konische Querschnittsverbreiterung ausgeformt, welche in einem Wirkquerschnitt 16 endet.

In einem Verbindungsbereich des Gehäuseunterteils 2 ist ein als elastischer Ring 18 ausgebildetes elastisches Fixierungselement mit einer mittigen Durchgangsöffnung eingeschnappt, deren Innendurchmesser kleiner als der Wirkquerschnitt 16 des Stützstabs 10 ist.

Beim Aufsetzen der Motorabdeckung 4 im Rahmen der Erstmontage wird nach Einsetzen des Luftfiltereinsatzes 6 der Stützstab 10 so weit in den elastischen Ring 18 eingeschoben, bis eine nach innen ragende und spitz zulaufende, elastische Rastlippe 22 in den Hinterschnitt 14 eingreift. In dieser Lage befindet sich die Motorabdeckung 10 in der Erstmontagefunktion und ist aufgrund einer nicht dargestellten elastischen Dichtung, die zwischen dem Gehäuseunterteil 2 und der Motorabdeckung 4 im Randbereich angeordnet ist, unter Vorspannung auf dem Gehäuseunterteil 2 fixiert.

Beim Crashfall wird durch die auf den Motorhaube 8 einwirkende Crashkraft neben der Motorhaube 8 auch die Motorabdeckung 4 in axialer Richtung des Stützstabs 10 weiter in den Ring 18 eingeschoben. Dabei muss die durch die Geometrie des Wirkquerschnitts 16, die Rastlippe 22 und die Materialeigenschaft des Rings 18 definierte Rückstellkraft, welche der Crashkraft entgegenwirkt, überwunden werden, um einen Relativersatz der Motorabdeckung 4 in Richtung des zum Gehäuseunterteils 2 zu ermöglichen.

Die Figur 3 zeigt eine alternative Ausführungsform des erfindungsgemäßen Verbindungsbereichs zwischen einer Motorabdeckung 4 und einem Gehäuseunterteil 2 zur Realisierung eines Fußgängerschutzes. Bei dieser Ausführungsform sind im Gegensatz zu der Ausführungsform gemäß Figur 2 die Erstmontage- und die Crashfunktion getrennt voneinander und nicht beide durch die paarweise Ausbildung des Stützstabs 10 und des elastischen Fixierungselements verwirklicht. Die Erstmontagefunktion wird bei dieser Ausbildung durch einen umfänglich zwischen dem Gehäuseunterteil 2 und der Motorabdeckung 4 ausgebildeten Rastrand 24 verwirklicht. In dieser Position ist der an der Motorabdeckung 6 einstückig angeformte Stützstab 10 in den in dem Gehäuseunterteil 2 montierten elastischen Ring 18 mit seiner zur Mitte ragenden Rastlippe 22 unter Vorspannung aufgesetzt. Beim Einwirken der Crashkraft wird der Stützstab 10 in axialer Richtung in den Ring 18 eingeschoben und drückt dabei den elastischen Ring 18 so auseinander, dass der Stützstab 10 durch die mittige Durchgangsöffnung unter Überwindung der Crashkraft hindurchtritt.

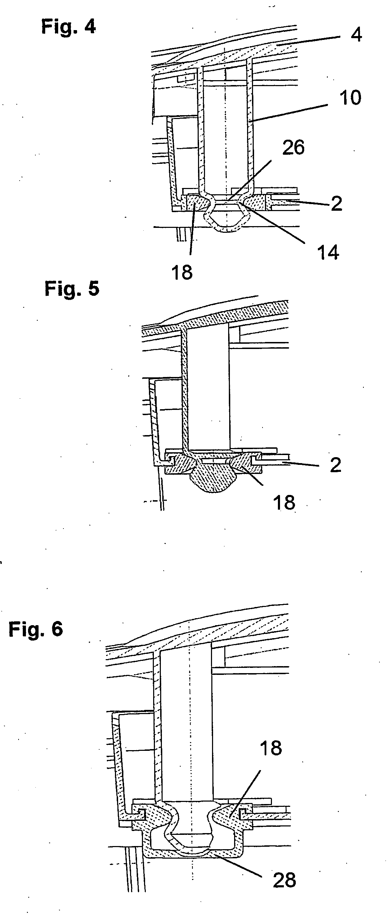

Die Figuren 6 bis 7 zeigen verschiedene Ausführungen der erfindungsgemäßen Funktionsglieder "elastisches Fixierungselement" und "Stützelement" in vergrößerten Querschnitten. In allen Fällen ist der Stützstab 10 einstückig an der Motorabdeckung 4 angeformt.

Bei der in Figur 6 dargestellten Ausführungsform ist der Stützstab 10 als umseitig geschlossener Hohlkörper ausgebildet, der einen Hinterschnitt 14 proximal von dem distalen Freiende 12 aufweist. Zur Verstärkung des Querschnittsbereichs am Hinterschnitt 14 ist innenseitig eine Querstrebe 26 ausgeformt. Der elastische Ring 18 ist bei der Ausführungsform gemäß Figur 4 an einer Fixierungsöffnung des Gehäuseunterteils 2 angespritzt.

Figur 5 zeigt eine weitere Ausführungsform, bei welcher der Stützstab 10 mit einer einseitig offenen Mantelfläche ausgebildet ist. Ansonsten ist dieser geometrisch ausgebildet wie der Stützstab in Figur 4. Ferner ist bei der Ausführungsform gemäß Figur 5 der elastische Ring 18 an der Fixierungsöffnung des Gehäuseunterteils 2 montiert. Hierzu weist der Ring 18 in der äußeren Mantelfläche eine umlaufende Eingriffsnut auf, in den in Einbaulage ein korrespondierend ausgebildeter, umlaufender Hakensteg eingreift. Der elastische Ring 18 ist geometrisch so ausgebildet, dass dieser unter Vorspannung in der Fixierungsöffnung des Gehäuseunterteils 2 sitzt.

Die Figur 6 zeigt eine weitere Ausführungsform des elastischen Rings 18, der an dem Gehäuseunterteil 2 in der in Figur 5 dargestellten Art und Weise montiert ist, jedoch zudem am unteren Ende eine einstückig angeformte Abdeckhaube 28 aufweist, welche zusätzliche elastische Kräfte bereitstellt, die beim Crashfall überwunden werden müssen.

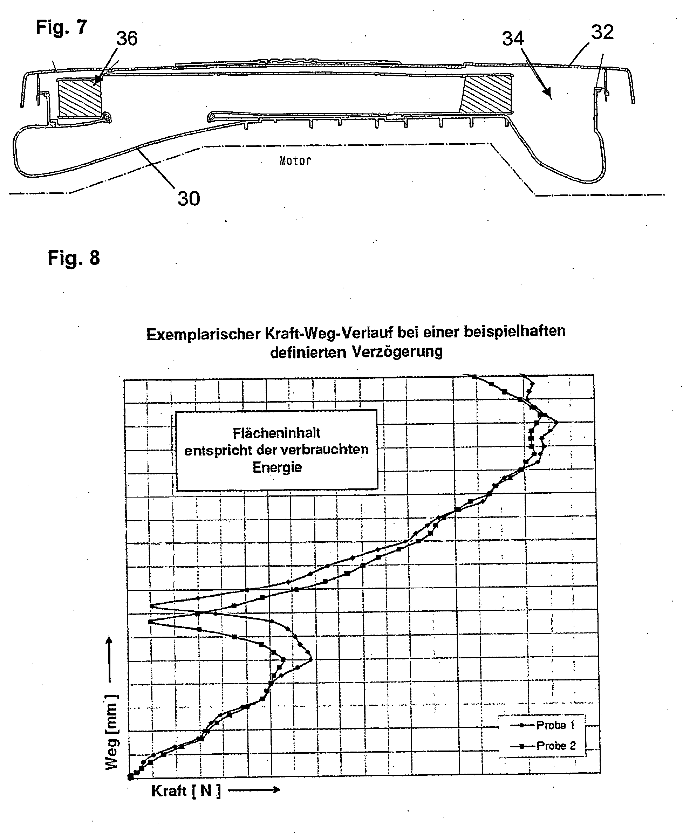

Bei der in Fig. 7 dargestellten Prinzipskizze einer Motorabdeckung im Längsschnitt ist ein Luftfiltergehäuse integriert. Die erfindungsgemäßen Stützelemente sind in der Darstellung nicht sichtbar. Die Motorabdeckung ist oberhalb eines Motors angeordnet und umfasst eine topfförmige Gehäuseunterschale 30 und eine mit dieser über die erfindungsgemäßen Stützelemente verbundenen deckelförmigen Gehäuseoberschale 32. Die Gehäuseunterschale 30 und der Gehäuseoberschale 32 schließen zwischen sich einen allseitig umschlossenen Raum ein, der ein geschlossenes Luftversorgungsvolumen 34 bildet. In diesem ist ferner ein bekanntes Luftfilterelement 36 eingesetzt.

Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden.als erfindungswesentlich beansprucht, soweit sie einzeln oder in Kombination gegenüber dem Stand der Technik neu sind.

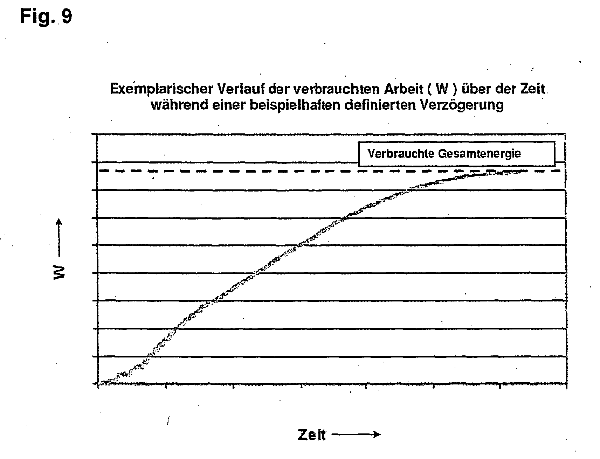

Zur Verdeutlichung der erfindungsgemäß erzielbaren definierten Verzögerung ist in den Figuren 8 und 9 ein typischer Kaft-Weg-Verlauf und der Arbeit-Zeit-Verlauf darstellt, der entsteht, wenn man zwei erfindungsgemäß ausgebildete Bauteile relativ zueinander verschiebt.

In Fig. 8 ist zu erkennen, wie durch die geometrisch Ausbildung des in Figur 2 dargestellten Stützstabs 10 und des elastischen Rings 18 gemäß die Kraft zur Überwindung des konischen proximalen Endes bis zum ersten Scheitelpunkt zunächst ansteigt und dann wieder fast auf 0 abfällt, wenn der Ring 18 in den Hinterschnitt 14 eingreift. In dieser Position ist das Gehäuseoberteil in seiner Erstmontageposition. Im Kollisionsfall steigt die Kraft bis zum zweiten Scheitelpunkt aufgrund der konischen Ausbildung des Stützstabs 10 kontinuierlich an, wobei die Kraft des zweiten Scheitelpunkts etwa drei Mal so groß ist wie die des ersten Scheitelpunkts. Vorzugsweise beträgt die Kraft des ersten Scheitelpunkts ? N und die Kraft des zweiten Scheitelpunkts ? N. Durch andere Ausbildung der Geometrien des Stützstabs 10 und / oder des Rings 18 lassen sich einsatzbedingt andere Kraftverläufe beliebig realisieren.

Fig. 9 zeigt schließlich die verbrauchte Arbeit (W) über die Zeit während einer beispielhaft definierten Verzögerung, wobei der Scheitelpunkt die verbrauchte Gesamtenergie darstellt.

### Bezugszeichenliste

- 2: Gehäuseunterteil
- 4: Motorabdeckung
- 6: Luftfiltereinsatz
- 8: Motorhaube
- 10: Stützstab
- 12: Freiende
- 14: Hinterschnitt
- 16: Wirkquerschnitt
- 18: Ring
- 22: Rastlippe
- 24: Rastrand
- 26: Querstrebe
- 28: Abdeckhaube
- 30: Gehäuseunterschale
- 32: Gehäuseoberschale
- 34: huftversorgungsvolumen
- 36: huftfilterelement

## Patentansprüche

1. An einem Kraftfahrzeug befestigbares Gehäuse mit einem ersten Gehäuseteil und einem mit diesem verbindbaren zweiten Gehäuseteil, wobei das an dem ersten Gehäuseteil ein längliches Stützelement (10) ausgebildet ist, das mit einem proximalen Ende mit dem ersten Gehäuseteil verbunden ist und ein distal gelegenes Wirkende mit einem Wirkquerschnitt (16) aufweist, **DADURCH GEKENNZEICHNET, dass** das zweite Gehäuseteil ein elastisches Fixierungselement mit einer Durchgangsöffnung umfasst, deren Innendurchmesser kleiner ist als der Wirkquerschnitt (16) und dass dieses ausgebildet ist zur Realisierung einer definierten Verzögerung über einen vorbestimmten Weg zur Vermeidung eines harten Aufschlags eines Passanten.

2. Gehäuse nach Anspruch 1, **DADURCH GEKENNZEICHNET, dass** das, Stützelement (10) proximal von einem Freiende (12) einen Hinterschnitt (14) zur Bildung eines ersten Wirkquerschnitts aufweist, und dass sich ein weiterer Wirkquerschnitt (16) proximal an den Hinterschnitt (14) anschließt.

3. Gehäuse nach einem der vorhergehenden Ansprüche, **DADURCH GEKENNZEICHNET, dass** das Fixierungselement in einem Verbindungsbereich angeordnet ist, der eine Fixierungsöffnung aufweist, und dass das Fixierungselement eine in die Fixierungsöffnung eingesetzten Ring (18) mit einer Durchgangöffnung aufweist.

4. Gehäuse nach Anspruch 1, **DADURCH GEKENNZEICHNET, dass** das Stützelement am distalen Ende eine Verdickung mit einem Wirkquerschnitt aufweist, dass das Fixierungselement einen zur Aufnahme der Verdickung ausgebildeten Hohlkörper aufweist, dass der Hohlkörper eine obere Öffnung und eine untere Öffnung aufweist, die jeweils kleiner sind als der Wirkquerschnitt, und dass der Durchmesser der oberen Öffnung größer ist als der Durchmesser der unteren Öffnung.

5. Gehäuse nach einem der vorhergehenden Ansprüche, **DADURCH GEKENNZEICHNET, dass** das erste Gehäuseteil als Gehäusedeckel und das zweite Gehäuseteil als Gehäuseunterteil (2) ausgebildet ist.

6. Gehäuse nach einem der vorhergehenden Ansprüche, **DADURCH GEKENNZEICHNET, dass** die Gehäuseteile als Luftfiltergehäuse ausgebildet ist.

7. Gehäuse nach Anspruch 6, **DADURCH GEKENNZEICHNET, dass** das obere Gehäuseteil in einer Motorabdeckung (4) integriert ist.

8. Gehäuse nach Anspruch 7, **DADURCH GEKENNZEICHNET, dass** die Motorabdeckung als Dekorelement ausgebildet ist.

9. Gehäuse nach Anspruch 6 bis 8, **DADURCH GEKENNZEICHNET, dass** in dem Luftfiltergehäuse zudem ein Filterelement angeordnet ist.

10. Gehäuse nach einem der vorhergehenden Ansprüche, **DADURCH GEKENNZEICHNET, dass** dieses als Kunststoffgehäuse ausgebildet ist.

11. Gehäuse nach einem der vorhergehenden Ansprüche, **DADURCH GEKENNZEICHNET, dass** durch eine geometrische Gestaltung des Wirkquerschnitts (16) und / oder des Stützelements (10) ein definiertes Kraft-/Weg-Verhalten erzielbar ist.

12. Gehäuse nach einem der vorhergehenden Ansprüche, **DADURCH GEKENNZEICHNET, dass** durch die Materialwahl des Fixierungselements ein definiertes Kraft-/Weg-Verhalten erzielbar ist.

13. Gehäuse nach einem der vorhergehenden Ansprüche, **DADURCH GEKENNZEICHNET, dass** die Wirkfläche des Stützelements (10) und / oder des elastischen Fixierungselements beschichtet sind.

14. Gehäuse nach einem der Ansprüche 5 bis 12, **DADURCH GEKENNZEICHNET, dass** das Luftfiltergehäuses mindestens zwei Gehäuseteile umfasst.

15. Gehäuse nach Anspruch 13, **DADURCH GEKENNZEICHNET, dass** die mindestens zwei Gehäuseteile ein Luftversorgungsvolumen umschließen.

16. Gehäuse nach Anspruch 14, **DADURCH GEKENNZEICHNET, dass** das Luftversorgungsvolumen ein abgeschlossenes Luftvolumen bildet.

17. Gehäuse nach einem der Ansprüche 13 bis 15, **DADURCH GEKENNZEICHNET, dass** die durch die mindestens zwei Gehäuseteile gebildete Struktur geräuschabschirmend ausgebildet ist.

## Claims

1. Housing which can be fixed to a motor vehicle, comprising a first housing part and, connectable thereto, a second housing part, wherein an elongate support element (10) is formed on the first housing part, which element is connected with a proximal end to the first housing part and has a distally located effective end with an effective cross section (16), **CHARACTERISED IN that** the second housing part comprises a resilient fixing element with a through-opening, the inside diameter of which is smaller than the effective cross section (16), and that this is formed to achieve a defined retardation over a predetermined distance in order to avoid hitting a passer-by hard.

2. Housing according to Claim 1, **CHARACTERISED IN that** the support element (10) has an undercut (14) proximally from a free end (12) in order to form a first effective cross section, and that a further effective cross section (16) adjoins the undercut (14) proximally.

3. Housing according to any one of the preceding Claims, **CHARACTERISED IN that** the fixing element is disposed in a connecting region which has a fixing opening, and that the fixing element has a ring (18), which is inserted in the fixing opening, with a through-opening.

4. Housing according to Claim 1, **CHARACTERISED IN that** the support element has a thickening with an effective cross section at the distal end, that the fixing element has a hollow body which is formed to accommodate the thickening, that the hollow body has a top opening and a bottom opening, which are in each case smaller than the effective cross section, and that the diameter of the top opening is larger than the diameter of the bottom opening.

5. Housing according to any one of the preceding Claims, **CHARACTERISED IN that** the first housing part is formed as a housing cover and the second housing part is formed as a housing bottom part (2).

6. Housing according to any one of the preceding Claims, **CHARACTERISED IN that** the housing parts are formed as air filter housings.

7. Housing according to Claim 6, **CHARACTERISED IN that** the top housing part is integrated in an engine cover (4).

8. Housing according to Claim 7, **CHARACTERISED IN that** the engine cover is formed as a decorative element.

9. Housing according to Claims 6 to 8, **CHARACTERISED IN that** a filter element is in addition disposed in the air filter housing.

10. Housing according to any one of the preceding Claims, **CHARACTERISED IN that** this is formed as a plastics housing.

11. Housing according to any one of the preceding Claims, **CHARACTERISED IN that** a defined force/distance behaviour can be obtained through a geometric configuration of the effective cross section (16) and/or of the support element (10).

12. Housing according to any one of the preceding Claims, **CHARACTERISED IN that** a defined force/distance behaviour can be obtained through the choice of material for the fixing element.

13. Housing according to any one of the preceding Claims, **CHARACTERISED IN that** the effective area of the support element (10) and/or of the resilient fixing element is coated.

14. Housing according to any one of Claims 5 to 12, **CHARACTERISED IN that** the air filter housing comprises at least two housing parts.

15. Housing according to Claim 13, **CHARACTERISED IN that** the at least two housing parts encompass an air supply volume.

16. Housing according to Claim 14, **CHARACTERISED IN that** the air supply volume forms a closed air volume.

17. Housing according to any one of Claims 13 to 15, **CHARACTERISED IN that** the structure which is constituted by the at least two housing parts is formed so as to be sound-insulating.

## Revendications

1. Boîtier pouvant être fixé sur un véhicule automobile, comportant une première partie et une seconde partie pouvant être reliée à la première, un élément de support allongé (10) étant formé sur la première partie et relié à ladite première partie par une extrémité proximale et présentant une extrémité distale fonctionnelle avec une section transversale fonctionnelle (16), **caractérisé en ce que** la seconde partie du boîtier possède un élément de fixation élastique pourvu d'un trou traversant dont le diamètre interne est inférieur à celui de la section transversale fonctionnelle (16) et **en ce que** celui-ci est formé pour réaliser un ralentissement défini par le biais d'un parcours prédéfini pour éviter de percuter violemment un passant.

2. Boîtier selon la revendication 1, **caractérisé en ce que** l'élément de support (10) présente à proximité d'une extrémité libre (12) une contre-dépouille (14) pour former une première section transversale fonctionnelle et **en ce qu'**une autre section transversale fonctionnelle (16) se raccorde à proximité de la contre-dépouille (14).

3. Boîtier selon l'une quelconque des précédentes revendications, **caractérisé en ce que** l'élément de fixation est disposé dans une zone de liaison présentant une ouverture de fixation, et **en ce que** l'élément de fixation présente une bague (18) placée dans l'ouverture de fixation, avec un trou traversant.

4. Boîtier selon la revendication 1, **caractérisé en ce que** l'élément de support présente au niveau de l'extrémité distale une surépaisseur avec une section transversale fonctionnelle, **en ce que** l'élément de fixation présente un corps creux réalisé pour recevoir la surépaisseur, **en ce que** le corps creux présente une ouverture en partie supérieure et une ouverture en partie inférieure qui sont, respectivement, plus petites que la section transversale fonctionnelle et **en ce que** le diamètre de l'ouverture en partie supérieure est supérieur au diamètre de l'ouverture en partie inférieure.

5. Boîtier selon l'une quelconque des précédentes revendications, **caractérisé en ce que** la première partie du boîtier est réalisée en tant que couvercle de boîtier et la seconde partie de boîtier, en tant que base de boîtier (2).

6. Boîtier selon l'une quelconque des précédentes revendications, **caractérisé en ce que** les parties du boîtier sont réalisées en tant que boîtier de filtre à air.

7. Boîtier selon la revendication 6, **caractérisé en ce que** la partie du boîtier supérieure est intégrée dans un élément de recouvrement du moteur (4).

8. Boîtier selon la revendication 7, **caractérisé en ce que** l'élément de recouvrement du moteur est réalisé en tant qu'élément de décor.

9. Boîtier selon les revendications 6 à 8, **caractérisé en ce qu'**il est disposé, en plus, un élément filtrant dans le boîtier de filtre à air.

10. Boîtier selon l'une quelconque des précédentes revendications, **caractérisé en ce que** celui-ci est réalisé en tant que boîtier en matière plastique.

11. Boîtier selon l'une quelconque des précédentes revendications, **caractérisé en ce qu'**une conception géométrique de la section transversale fonctionnelle (16) et/ou de l'élément de support (10) permet d'obtenir un comportement défini de force/-course.

12. Boîtier selon l'une quelconque des précédentes revendications, **caractérisé en ce que** le choix de matériau de l'élément de fixation permet d'obtenir un comportement défini de force/-course.

13. Boîtier selon l'une quelconque des précédentes revendications, **caractérisé en ce que** la surface active de l'élément de support (10) et/ou de l'élément de fixation élastique est revêtue.

14. Boîtier selon les revendications 5 à 12, **caractérisé en ce que** le boîtier de filtre à air comprend au moins deux parties de boîtier.

15. Boîtier selon la revendication 13, **caractérisé en ce qu'**au moins une des deux parties de boîtier enferme un volume d'alimentation en air.

16. Boîtier selon la revendication 14, **caractérisé en ce que** le volume d'alimentation en air forme un volume d'air fermé.

17. Boîtier selon les revendications 13 à 15, **caractérisé en ce que** la structure formée par au moins une des deux parties de boîtier est réalisée de manière phonétiquement isolante.
